# FASCICULE DE BREVET EUROPEEN

(11) **EP 1 054 091 B1**
(45) Date de publication et mention de la délivrance du brevet: **25.08.2004**
(21) Numéro de dépôt: 00420101.8
(22) Date de dépôt: 19.05.2000
(51) Int. Cl.: D04H 1/74, D04H 3/04, D04H 1/64, D04H 3/12, B32B 5/08, C04B 35/83, B29C 67/00

(54) **Nappe unidirectionnelle de fibres de carbone**
Unidirektionale Bahn aus Kohlenstofffasern
Unidirectional web of carbon fibers

(30) Priorité: 20.05.1999 FR 9906596
(43) Date de publication de la demande: 22.11.2000
(73) Titulaire: SA Schappe, 88520 Ban de Laveline (FR)
(72) Inventeur: Guevel, Jean, 01480 Jassans Riottier (FR); Bontemps, Guy, 01970 Tenay (FR)
(74) Mandataire: Maureau, Philippe

(56) Documents cités:
- EP-A- 0 274 970
- EP-A- 0 330 980
- WO-A-92/17331
- WO-A-96/01177
- WO-A-98/44183
- US-A- 4 919 739
- US-A- 4 990 207

## Description

La présente invention a pour objet une nappe unidirectionnelle de fibres de carbone.

L'industrie des matériaux composites utilise de façon courante des fibres de carbone en raison de leurs capacités de renforcement et de leur légèreté. Les fibres de carbone pouvant être utilisées appartiennent à différents grades que l'on peut définir comme suit, en fonction de leur module de Young :
- amorphe E ≤ 100 GPa
- bas module 100 < E ≤ 180 GPa
- haute résistance 180 < E < 250 GPa
- module intermédiaire 250 ≤ E < 350 GPa
- haut module 350 ≤ E < 500 GPa
- ultra haut module E ≥ 500 GPa

Ces fibres peuvent être issues de précurseurs tels que polyacrylonitrile (PAN), brai, ou rayonne.

Une première solution consiste à utiliser des filaments continus de carbone possédant la même orientation, qui sont imprégnés par des résines thermodurcissables. Ces filaments continus forment des rubans ou des nappes, orientés de manière particulière en fonction des sollicitations auxquelles la pièce finale sera soumise. Ces nappes peuvent être utilisées seules ou empilées les unes sur les autres après avoir été préalablement découpées aux dimensions de la pièce à réaliser. Les orientations relatives des filaments dans les nappes peuvent varier de ± 0 à 45°, ± 0 à 30°, ou ±0 à 60°. Toutes les combinaisons angulaires sont possibles, tant symétriques que dissymétriques. Les préformes employées sont ensuite consolidées en réticulant la résine par une élévation de température dans un autoclave, en utilisant soit des moules fermés, soit des dispositifs à membrane, dans lesquels les préformes sont sous vide.

Ces différents systèmes rencontrent des difficultés lorsque les pièces comportent des saillies profondes. En effet, les filaments continus de carbone ne peuvent pas glisser les uns relativement aux autres. En conséquence, soit certains des filaments cassent, soit des plis sont formés.

Les mêmes difficultés se retrouvent dans la technologie de réalisation de pièces en carbone-carbone, obtenues soit en voie humide, soit en voie gazeuse.

Dans les matériaux carbone-carbone, les fibres de renfort sont en carbone, et la matrice est un substrat de carbone déposé entre les fibres et lié à ces dernières. Le substrat de carbone est obtenu par carbonisation de résines phénoliques en atmosphère inerte ou sous vide, préalablement déposées pendant l'imprégnation initiale des nappes unidirectionnelles de carbone. La carbonisation comporte un certain nombre d'étapes pour arriver à une densification correcte (écroutage, ré-imprégnation, etc). Cela constitue la technique par voie humide.

La technique par voie gazeuse consiste à partir de nappes unidirectionnelles non imprégnées, préalablement drapées dans un moule poreux aux gaz. Le four est traversé par un courant gazeux constitué d'un hydrocarbure saturé, par exemple du métane CH₄ et subit, avant de traverser la préforme, un craquage qui permet la séparation des atomes de carbone et des molécules d'hydrogène : CH₄ → C + 2H₂. Les atomes de carbone sont piégés dans la préforme fibreuse et constituent, après un temps assez long, entrecoupé d'écroutages, la matrice solide qui lie les fibres de la préforme entre elles.

Il est également connu par le brevet européen, EP-A-274 970, de convertir des filaments continus de carbone en fibres discontinues, par un étirage lent et contrôlé, suivant une technique de craquage. Les fibres obtenues sont de longueur variable, mais contrôlée. Après obtention de fibres parallèles, ces fibres sont soumises à une opération de filature classique. Or, pour réaliser une opération de filature, il convient de disposer de fibres dont la longueur moyenne est comprise entre 90 et 120 mm environ. Dans ces conditions, la capacité de réalisation de pièces de forme complexe et possédant des saillies à très fort dénivellement n'est pas possible, car si les fibres se déplacent de façon trop importante les unes par rapport aux autres, il se produit une dislocation de la nappe. Inversement, si l'on doit réaliser une pièce comportant de nombreuses mais petites déformations, les fibres sont trop longues pour permettre à la nappe d'épouser de telles déformations.

Le document WO 9601177 permet de réaliser des fibres discontinues par destruction par un rayonnement d'onde, notamment un rayonnement laser. Les impacts du laser sont répétés à différents emplacements. Il s'agit d'une destruction d'un faisceau de fibre, car la tâche focale du rayonnement est bien supérieure au diamètre des fibres. Contrairement au craquage, le procédé utilisé ne crée par de rupture individuelle aléatoire des fibres à l'endroit ou les fibres présentent un défaut de structure. Le principe du craquage permet notamment de supprimer les points de faiblesse des fibres discontinues, ce qui n'est pas le cas pour le procédé décrit dans le document WO 9601177.

Le document WO 9844183 décrit pour sa part une nappe obtenue à partir de bandes provenant de l'étalement d'un câble pouvant être un câble craqué en un ruban. Ce ruban est un ensemble de fibres discontinues parallèles mais ne possédant pas de largeur et d'épaisseur définie. La cohésion entre fibre est naturelle et donnée par le crochet des fibres qui s'interpénètrent. Un ruban tel que décrit, du fait de l'inconstance de sa géométrie, ne présente pas les propriétés de déformation voulues.

Le but de l'invention est de fournir une nappe unidirectionnelle de fibres de carbone, qui puisse se déformer pour réaliser des formes de profondeur importante, ou pour réaliser une pluralité de petits reliefs.

A cet effet, la présente invention concerne un procédé de réalisation d'une nappe unidirectionnelle de fibres de carbone, caractérisé en ce qu'il consiste, partant d'une série de filaments continus et parallèles de carbone, à réaliser un craquage des filaments par un étirage lent et contrôlé, à l'intérieur d'une craqueuse, puis à réaliser en ligne sans déformation de la nappe et sans exercer une tension sur celle-ci, l'assemblage des fibres discontinues à l'aide d'une résine ou d'un adhésif à caractère fugace, ces fibres discontinues possédant une distribution de longueur telle que la longueur moyenne des fibres, c'est-à-dire la longueur moyenne de 50 % des fibres d'un échantillon, soit comprise entre 40 et 70 % environ de la longueur de la fibre la plus longue de l'échantillon, la nappe possédant ainsi une capacité d'allongement correspondant à un déplacement relatif des fibres de carbone dans une plage comprise entre 0 et 45 % de la fibre la plus longue.

Les fibres étant discontinues, peuvent glisser les unes relativement aux autres lors de la mise en forme pour réaliser une pièce, après que la viscosité de la résine ait été abaissée ou que l'adhésif à caractère fugace ait permis la libération des fibres.

En fonction de la caractéristique des multifilaments amenés à la machine de craquage, et en fonction de la longueur moyenne souhaitée pour les fibres d'un échantillon, il est possible d'adapter les caractéristiques de la machine. C'est ainsi que, pour obtenir des fibres longues, il convient d'écarter les séries de rouleaux de traction et de disposer d'une différence de vitesse relativement faible d'une série de cylindres à la suivante, tandis que pour obtenir des fibres plus courtes, il faut réduire l'écart entre les différentes séries de cylindres de traction, et augmenter la différence de vitesse d'un cylindre à un autre. Ces réglages doivent tenir compte également du titre et du grade des filaments de carbone.

Suivant un premier mode de mise en oeuvre, ce procédé consiste à réaliser l'assemblage des fibres discontinues de carbone par imprégnation de résine, par passage dans un bain.

Selon un autre mode de mise en oeuvre, ce procédé consiste à réaliser l'assemblage des fibres discontinues de carbone par pulvérisation sur les deux faces de la nappe d'un spray à base de cellulose.

Dans l'un et l'autre cas, ce procédé consiste, après l'assemblage des fibres discontinues de carbone, à réaliser l'évaporation des solvants.

Enfin, ce procédé consiste, après assemblage des fibres discontinues de carbone, à réaliser le dépôt de deux bandes de protection, par exemple en polyéthylène, sur les deux faces de la nappe, avant de réaliser son enroulement sur un mandrin.

Une nappe unidirectionnelle de fibres de carbone obtenu par ce procédé est caractérisée en ce que les fibres sont discontinues, possèdent une distribution de longueur telle que la longueur moyenne des fibres, c'est-à-dire la longueur moyenne de 50 % des fibres d'un échantillon, soit comprise entre 40 et 70 % environ de la longueur de la fibre la plus longue de l'échantillon, et les fibres sont assemblées à l'aide d'une résine ou d'un adhésif à caractère fugace, la nappe possédant ainsi une capacité d'allongement correspondant à un déplacement relatif des fibres de carbone dans une plage comprise entre 0 et 45 % de la fibre la plus longue.

Suivant une caractéristique, la longueur moyenne des fibres est supérieure à 30 mm.

Selon une possibilité, la longueur moyenne des fibres est supérieure à 120 mm.

Selon une autre possibilité, la longueur moyenne des fibres est comprise entre 30 et 90 mm. Il ressort de ce qui précède que la longueur moyenne des fibres peut varier sur une plage très large, permettant, suivant les applications, de disposer de fibres dont la longueur moyenne est élevée ou, au contraire, de fibres dont la longueur moyenne est faible.

La nappe selon l'invention peut être réalisée avec des fibres obtenues à partir de multifilaments de carbone choisis parmi tous les grades définis précédemment. La nappe peut avoir une largeur comprise, par exemple, entre 10 et 200 mm, en fonction du choix du titre des multifilaments, ainsi que du nombre de multifilaments juxtaposés pour obtenir la largeur souhaitée.

Les titres des multifilaments de départ peuvent être choisis dans les valeurs suivantes, où K = 10³ : 400 K, 320 K, 160 K, 80 K, 70 K, 60 K, 50 K, 40 K, 24 K, 12 K, 6 K, 3 K.

Suivant une forme d'exécution de la nappe selon l'invention, l'assemblage des fibres est réalisé par imprégnation d'une résine thermodure choisie parmi les résines époxy, phénoliques, bismaléimides, furaniques.

Suivant une autre forme d'exécution de cette nappe, l'assemblage des fibres est réalisé par pulvérisation d'un spray à base de cellulose.

Ensuite, l'assemblage de fibres de carbone est revêtu, sur ses deux faces, d'un film protecteur, par exemple en polyéthylène. Ce film protège l'assemblage et facilite sa manipulation, notamment en permettant son stockage en position enroulée sur un mandrin.

De toute façon, l'invention sera bien comprise à l'aide de la description qui suit, en référence au dessin schématique annexé représentant, à titre d'exemples non limitatifs, deux formes d'exécution d'un dispositif pour la mise en oeuvre de ce procédé permettant l'obtention d'une nappe selon l'invention :
Figure 1 est une vue très schématique de côté d'une installation permettant d'obtenir une nappe de fibres selon l'invention ;
Figure 2 en est une vue partielle de dessus au poste de réalisation du craquage ;
Figure 3 est une vue partielle d'une autre installation, montrant plus spécialement le poste d'assemblage des fibres de carbone ;
Figures 4 à 7 sont cinq vues représentant la distribution de la longueur des fibres, considérées dans cinq échantillons distincts.

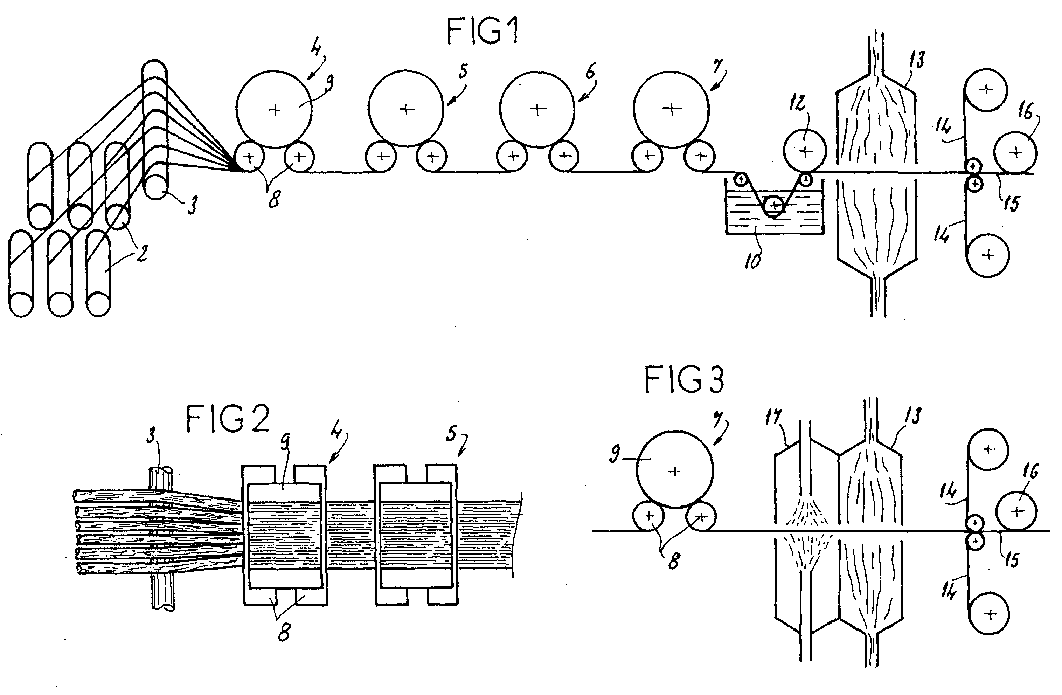

La figure 1 comprend un certain nombre de bobines 2, sur lesquelles sont enroulés des filaments continus de carbone. Ces filaments sont dévidés simultanément et passent sur un même cylindre 3, à partir duquel ils convergent pour former un ruban. Le ruban passe à l'intérieur d'une machine de craquage comportant quatre groupes de cylindres désignés respectivement par les références 4, 5, 6 et 7, chaque groupe comprenant deux cylindres inférieurs identiques 8 contre lesquels prend appui un troisième cylindre 9 appuyant fortement sur les deux premiers par un dispositif hydraulique. Les différents groupes de cylindres 4-7 possèdent des vitesses circonférencielles respectives de plus en plus élevées. La nappe fibreuse de carbone est donc étirée en permanence. Il se produit une cassure des filaments continus, de préférence aux endroits qui comportent un défaut de structure, et par suite une faiblesse des propriétés mécaniques. Les deux paramètres fondamentaux constituant l'obtention des distributions de longueurs de fibres, sont les différences relatives des différents groupes de cylindres, ainsi que la distance des points de pinçage. A la sortie de la machine de craquage, c'est-à-dire en aval du groupe 7 de cylindres, la nappe est constituée par un ensemble de fibres discontinues de carbone, de différentes longueurs. Ce ruban ne possédant pas une tenue mécanique importante, il convient, selon l'invention, de réaliser l'assemblage des fibres sans déformation et sans tension.

Dans la forme d'exécution représentée à la figure 1, la nappe passe dans un bain 10 de résine. Le taux est réglé par exprimage par passage entre deux rouleaux désignés par la référence générale 12. Un dispositif d'évaporation des solvants 13 peut éventuellement être placé en aval du poste d'imprégnation. En aval de ce poste d'évaporation est disposé un poste permettant de revêtir la nappe sur ses deux faces par deux films 14 de polyéthylène, destinés à assurer la protection de la nappe. En aval du poste assurant la mise en place des films 14, la nappe 15 ainsi formée est enroulée sur un mandrin 16.

Il peut être noté que les filaments de carbone mis en oeuvre ont pu subir un traitement de surface, tel qu'une oxydation électrochimique ou par air pulsé. Un ensimage constitué d'une huile hydrocarbonée additionnée d'un agent émulsifiant est déposé à raison de 0,1 à 0,2 %, afin d'assurer une bonne cohésion du faisceau de fibres continues, ainsi qu'un bon glissement des fibres les unes par rapport aux autres pendant l'opération de craquage. Cet ensimage peut être éliminé par un lavage à 60°C à l'eau en ajustant le pH à 12 à l'aide de carbonate de sodium.

La figure 3 est une vue partielle d'une autre installation, dans laquelle la nappe est obtenue dans les mêmes conditions que précédemment, par rupture de filaments à l'intérieur d'une machine de craquage. Dans ce cas, il est procédé à la consolidation de la nappe sèche, notamment pour des applications en carbone-carbone. La nappe traverse une enceinte 17 à l'intérieur de laquelle est pulvérisé sur ses deux faces un spray à base de cellulose de manière à lui donner une cohésion complémentaire. La nappe passe ensuite à l'intérieur d'un dispositif d'évaporation 13 avant de recevoir une protection à l'aide de films de polyéthylène.

Les nappes ainsi obtenues peuvent être disposées selon la géométrie appropriée, avant de subir si besoin est, dans certaines applications, une opération d'aiguilletage destinée à lier les nappes entre elles en créant une orientation de certaines fibres dans la direction z.

Généralement, les additifs sont éliminés thermiquement en atmosphère inerte entre 1000 et 1500°C, avant une opération de densification en voie gazeuse.

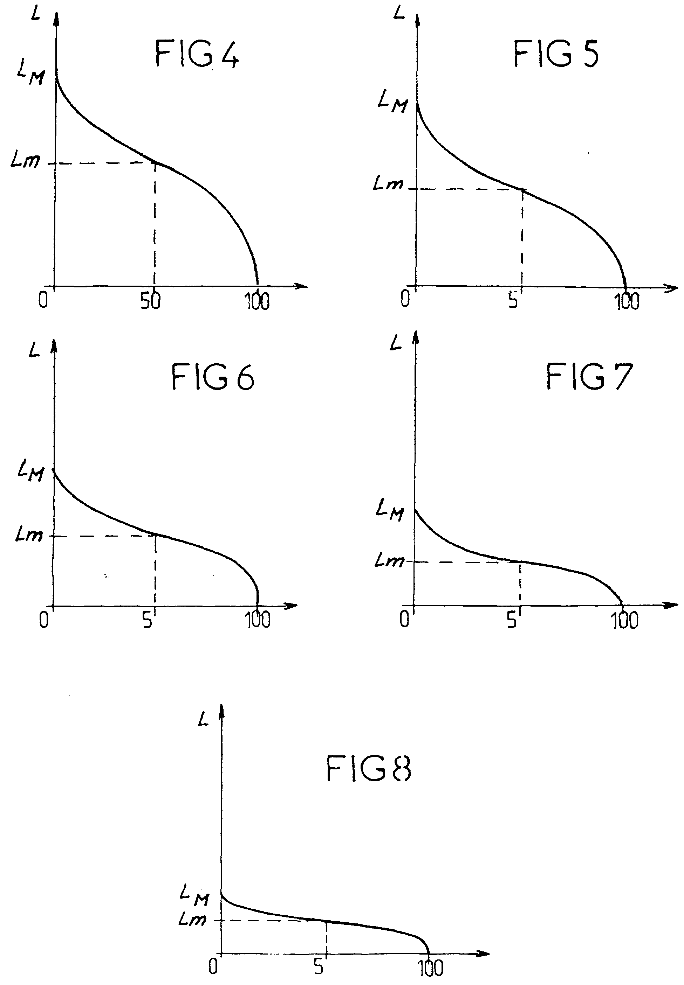

Les figures 4 à 8 représentent cinq diagrammes de distribution des longueurs de fibres, dans cinq échantillons destinés à des applications différentes. Dans chacun de ces diagrammes, L_{M} désigne la longueur de la fibre la plus longue, et Lₘ désigne la longueur moyenne pour 50 % de la population. La capacité maximale de déplacement relatif des fibres les unes par rapport aux autres est fixée dans la fourchette de 0 à 45 % de la fibre la plus longue.

Les diagrammes correspondant aux différentes figures ont été établis en tenant compte des échantillons dont les longueurs de fibres et dont le déplacement relatif des fibres les unes relativement aux autres figurent dans le tableau suivant.

| | L_{M} | Lₘ | Déplacement relatif des fibres |
|---|---|---|---|
| Figure 4 | 220 mm | 120 mm | 0 à 99 mm |
| Figure 5 | 170 mm | 95 mm | 0 à 76,5 mm |
| Figure 6 | 128 mm | 70 mm | 0 à 57,6 mm |
| Figure 7 | 90 mm | 50 mm | 0 à 40,5 mm |
| Figure 8 | 50 mm | 30 mm | 0 à 22,5 mm |

Il ressort de ce tableau qu'il est possible de réaliser, grâce à l'invention, des nappes à partir de fibres unidirectionnelles de carbone, avec des fibres discontinues dont la longueur peut parfaitement être adaptée aux applications recherchées. C'est ainsi que pour la réalisation de pièces, dans lesquelles l'allongement de la nappe doit être important, il est possible d'utiliser des fibres très longues, alors que pour la réalisation de pièces comportant notamment une pluralité de petites déformations, il est possible d'utiliser des fibres très courtes. Il doit être rappelé que les fibres courtes et les fibres longues ne pouvaient pas être utilisées dans les techniques antérieures mettant en oeuvre des fibres discontinues, qui devaient toutes être choisies dans une plage de longueur très réduite pour permettre une opération ultérieure de filature.

Enfin, il faut souligner le caractère économique du procédé et, par suite, des nappes ainsi obtenues, dans la mesure où l'opération d'assemblage réalisée est d'un coût sensiblement inférieur au coût d'une opération de filature, cette opération d'assemblage étant réalisée à l'aide de moyens simples, dans la suite même du procédé de craquage.

## Revendications

1. Procédé de réalisation d'une nappe unidirectionnelle de fibres de carbone, **caractérisé en ce qu'**il consiste, partant d'une série de filaments continus et parallèles de carbone, à réaliser un craquage des filaments par un étirage lent et contrôlé, à l'intérieur d'une craqueuse (4-7), puis à réaliser en ligne sans déformation de la nappe et sans exercer une tension sur celle-ci, l'assemblage des fibres discontinues à l'aide d'une résine (10) ou d'un adhésif à caractère fugace, ces fibres discontinues possédant une distribution de longueur telle que la longueur moyenne des fibres, c'est-à-dire la longueur moyenne de 50 % des fibres d'un échantillon, soit comprise entre 40 et 70 % environ de la longueur de la fibre la plus longue de l'échantillon, la nappe possédant ainsi une capacité d'allongement correspondant à un déplacement relatif des fibres de carbone dans une plage comprise entre 0 et 45 % de la fibre la plus longue.

2. Procédé selon la revendication 1, **caractérisé en ce qu'**il consiste à réaliser l'assemblage des fibres discontinues de carbone par imprégnation de résine, par passage dans un bain (10).

3. Procédé selon la revendication 1, **caractérisé en ce qu'**il consiste à réaliser l'assemblage des fibres discontinues de carbone par pulvérisation (17) sur les deux faces de la nappe (15) d'un spray à base de cellulose.

4. Procédé selon l'une des revendications 2 et 3, **caractérisé en ce qu'**il consiste, après l'assemblage des fibres discontinues de carbone, à réaliser l'évaporation (13) des solvants.

5. Procédé selon l'une des revendications 1 à 4, **caractérisé en ce qu'**il consiste, après assemblage des fibres discontinues de carbone, à réaliser le dépôt de deux bandes de protection (14), par exemple en polyéthylène, sur les deux faces de la nappe (15), avant de réaliser son enroulement sur un mandrin (16).

6. Nappe unidirectionnelle de fibres de carbone obtenu par un procédé selon l'une des revendications 1 à 5, **caractérisée en ce que** les fibres sont discontinues, possèdent une distribution de longueur telle que la longueur moyenne des fibres, c'est-à-dire la longueur moyenne de 50 % des fibres d'un échantillon, soit comprise entre 40 et 70 % environ de la longueur de la fibre la plus longue de l'échantillon, et les fibres sont assemblées à l'aide d'une résine (10) ou d'un adhésif à caractère fugace, la nappe possédant ainsi une capacité d'allongement correspondant à un déplacement relatif des fibres de carbone dans une plage comprise entre 0 et 45 % de la fibre la plus longue.

7. Nappe selon la revendication 6, **caractérisée en ce que** la longueur moyenne des fibres est supérieure à 30 mm.

8. Nappe selon la revendication 7, **caractérisée en ce que** la longueur moyenne des fibres est supérieure à 120 mm.

9. Nappe selon la revendication 7, **caractérisée en ce que** la longueur moyenne des fibres est comprise entre 30 et 90 mm.

10. Nappe selon l'une quelconque des revendications 6 à 9, **caractérisée en ce que** l'assemblage des fibres est réalisé par imprégnation d'une résine thermodure choisie parmi les résines époxy, phénoliques, bismaléimides, furaniques.

11. Nappe selon l'une quelconque des revendications 6 à 9, **caractérisée en ce que** l'assemblage des fibres est réalisé par pulvérisation d'un spray à base de cellulose.

12. Nappe selon l'une quelconque des revendications 6 à 11, **caractérisée en ce que** l'assemblage de fibres de carbone est revêtu, sur ses deux faces, d'un film protecteur, par exemple en polyéthylène.

## Patentansprüche

1. Verfahren zur Herstellung eines unidirektionalen Vlieses aus Kohlenstofffasern, **dadurch gekennzeichnet, dass** es, ausgehend von einer Reihe kontinuierlicher und paralleler Kohlenstofffilamente, aus einem Zerreißen der Filamente durch ein langsames und kontrolliertes Ziehen Innerhalb einer Vorrichtung zum Zerreißen (4-7), dann ohne Verformung des Vlieses und ohne einen Zug auf dieses auszuüben, in einer Anlage aus Verbinden der diskontinuierlichen Fasem mit Hilfe eines Harzes (10) oder eines flüchtigen Klebstoffes besteht, wobei die diskontinuierlichen Fasern eine Längenverteitung besitzen, derartig, dass die mittlere Länge der Fasern, d. h. die mittlere Länge von 50% der Fasern einer Stichprobe zwischen ungefähr 40 und 70% der Länge der längsten Faser der Probe umfasst ist, wobei das Vlies folglich die Fähigkeit zur Verlängerung entsprechend einer relativen Verschiebung der Kohlenstofffasern in einem Bereich umfasst zwischen 0 und 45 % der längsten Faser besitzt.

2. Verfahren nach Anspruch 1, **dadurch gekennzeichnet, dass** es aus dem Verbinden der diskontinuierlichen Kohlenstofffasem durch Imprägnieren mit Harz durch Passage durch ein Bad (10) besteht

3. Verfahren nach Anspruch 1, **dadurch gekennzeichnet, dass** es aus dem Verbinden der diskontinuierlichen Kohlenstofffasern durch Spritzen (17) eines Sprays auf Basis von Cellulose auf beide Seiten des Vlieses (15) besteht

4. Verfahren nach einem der Ansprüche 2 und 3, **dadurch gekennzeichnet, dass** es nach dem Verbinden der diskontinuierlichen Kohlenstofffasern aus dem Verdampfen (13) des Lösungsmittels besteht.

5. Verfahren nach einem der Ansprüche 1 bis 4, **dadurch gekennzeichnet, dass** es, nach Verbinden der diskontinuierlichen Kohlenstofffasern aus dem Aufbringen von zwei Schutzbändem (14), z. B. aus Polyethylen, auf die beiden Seiten des Vlieses (15) besteht, bevor es auf eine Drehspindel (16) aufgerollt wird.

6. Unidirektionales Vlies aus Kohlenstofffasern, erhalten durch ein Verfahren nach einem der Ansprüche 1 bis 5, **dadurch gekennzeichnet, dass** die Fasern diskontinuierlich sind, wobei sie eine Längenverteilung besitzen, derartig dass die mittlere Länge der Fasern, d. h. die mittlere Länge von 50% der Fasern einer Stichprobe zwischen ungefähr 40 und 70% der Länge der längsten Faser der Probe umfasst ist, und die Fasem mit Hilfe eines Harzes (10) oder eines flüchtigen Klebstoffes verbunden sind, wobei das Vlies folglich die Fähigkeit zur Verlängerung entsprechend einer relativen Verschiebung der Kohlenstofffasern in einem Bereich umfasst zwischen 0 und 45 % der längsten Faser besitzt.

7. Vlies nach Anspruch 6, **dadurch gekennzeichnet, dass** die mittlere Länge der Fasern größer als 30 mm ist.

8. Vlies nach Anspruch 7, **dadurch gekennzeichnet, dass** die mittlere Länge der Fasern größer als 120 mm ist.

9. Vlies nach Anspruch 7, **dadurch gekennzeichnet, dass** die mittlere Länge der Fasern zwischen 30 mm und 90 mm umfasst ist.

10. Vlies nach einem der Ansprüche 6 bis 9, **dadurch gekennzeichnet, dass** die Fasern durch imprägnieren mit einem Thermodurharz ausgewählt aus Epoxid-, Phenol-, Bismaleimid-, Furanharzen verbunden sind.

11. Vlies nach einem der Ansprüche 6 bis 9, **dadurch gekennzeichnet, dass** die Fasern durch Spritzen eines Sprays auf Basis von Cellulose verbunden sind.

12. Vlies nach einem der Ansprüche 6 bis 11, **dadurch gekennzeichnet, dass** die verbundenen Kohlenstofffasern auf ihren beiden Seiten mit einem Schutzfilm, z. B. aus Polyethylen, versehen sind.

## Claims

1. A method of producing a unidirectional carbon fibre web, **characterised in that** starting from a batch of continuous, parallcl carbon filaments, it consists of fracturing the filaments by slow, controlled stretching inside a fracturing device (4-7), and then of joining the discontinuous fibres in line, without deformation of the web and without exerting a tension thereon, with the aid of a resin (10) or of an adhesive of a volatile nature, said discontinuous fibres having a length distribution such that the average length of the fibres, namely the average length of 50 % of the fibres in a sample, ranges between about 40 and 70 % of the length of the longest fibre in the sample, the web thus possessing an elongation capacity corresponding to a relative displacement of the carbon fibres within a range between 0 and 45 % of the longest fibre.

2. A method according to claim 1, **characterised in that** it consists of joining the discontinuous carbon fibres by resin impregnation, by passage through a bath (10).

3. A method according to claim 1, **characterised in that** it consists of joining the discontinuous carbon fibres by the spraying (17) of a cellulose-based spray on to the two faces of the web (15).

4. A method according to eitber one of claims 2 or 3, **characterised in that**, after joining the discontinuous carbon fibres, it consists of the evaporation (13) of solvents.

5. A method according to any one of claims 1 to 4, **characterised in that**, after joining the discontinuous carbon fibres, it consists of the application of two protective strips (14), made of polyethylene for example, to the two faces of the web (15) before winding the latter on a mandrel (16).

6. A unidirectional carbon fibre web obtained by a method according to any one of claims 1 to 5, **characterised in that** the fibres are discontinuous, have a length distribution such that the average length of the fibres, namely the average length of 50 % of the fibres in a sample, ranges between about 40 and 70 % of the length of the longest fibre in the sample, and the fibres are joined with the aid of a resin (10) or of an adhesive of a volatile nature, the web thus possessing an elongation capacity corresponding to a relative displacement of the carbon fibres within a range between 0 and 45 % of the longest fibre.

7. A web according to claim 6, **characterised in that** the average length of the fibres is greater than 30 mm.

8. A web according to claim 7, **characterised in that** the average length of the fibres is greater than 120 mm.

9. A web according to claim 7, **characterised in that** the average length of the fibres ranges between 30 and 90 mm.

10. A web according to any one of claims 6 to 9, **characterised in that** the fibres are joined by impregnation with a thermosetting resin selected from epoxy, phenolic, bismaleimide and furan resins.

11. A web according to any one of claims 6 to 9, **characterised in that** the fibres are joined by spraying with a cellulose-based spray.

12. A web according to any one of claims 6 to 11, **characterised in that** the assembly of carbon fibres is covered on its two faces by a protective film, which is made of polyethylenc, for example.
